Europäisches Patentamt

European Patent Office

Office européen des brevets

(11) Numéro de publication: **0 396 899**
**A2**

(12) **DEMANDE DE BREVET EUROPEEN**

(21) Numéro de dépôt: **90106264.6**

(51) Int. Cl.5: **B23P 15/40, B26F 1/38**

(22) Date de dépôt: **02.04.90**

(30) Priorité: **14.04.89 CH 1416/89**

(43) Date de publication de la demande:
**14.11.90 Bulletin 90/46**

(84) Etats contractants désignés:
**AT BE DE DK ES FR GB IT LU NL SE**

(71) Demandeur: **BOBST S.A.**
**Case Postale**
**CH-1001 Lausanne(CH)**

(72) Inventeur: **Barben, Martin**
**Gygerweg 14**
**CH-3700 Spiez/Wiler(CH)**
Inventeur: **Grolimund, Kuno**
**Ch. de la Roche 16**
**CH-1020 Renens(CH)**

(74) Mandataire: **Colomb, Claude**
**BOBST S.A. Case Postale**
**CH-1001 Lausanne(CH)**

(54) **Cylindre-outil dans une machine rotative travaillant une matière en bande ou en plaque et procédé de réalisation.**

(57) Le procédé de fabrication d'un cylindre-outil
consiste à :
- fabriquer un ensemble de segments (10) dont les
surfaces internes (14), longitudinales (16) et latérales
(12) sont usinées avec précision et dont la surface
externe est laissée à l'état d'ébauche,
- assembler sur un cylindre porteur (100) de manière
jointive l'ensemble des segments (10) précédemment réalisés constituant ainsi une nouvelle surface
externe cylindrique,
- usiner en l'outil désiré la surface cylindrique constituée par l'ensemble des surfaces externes de segments (10) montés sur le cylindre porteur.

FIG 1

# CYLINDRE-OUTIL DANS UNE MACHINE ROTATIVE TRAVAILLANT UNE MATIERE EN BANDE OU EN PLAQUE ET PROCEDE DE REALISATION

La présente invention est relative aux cylindres-outils appartenant à une machine rotative travaillant en continu à haute vitesse une matière en bande ou en plaque telle que, par exemple, des feuilles de cartons lors de la fabrication de boîtes d'emballage Les opérations de transformation plus particulièrement concernées consistent à réaliser des découpes de boîtes dans une feuille préalablement imprimée, ces découpes étant par la suite transformées par pliage et collage en boîtes définitives.

Par boîtes de qualité, on entend plus précisément des boîtes contenant le produit mais constituant aussi le support publicitaire et l'image de marque du produit contenu. Tel est le cas de boîtes de cigarettes de type "Flip-top" pour des cigarettes de luxe, c'est-à-dire des boîtes semi-rigides dont le haut se bascule en arrière pour faire apparaître les cigarettes de manière très accessible. On comprend aisément que pour parvenir à un produit de qualité, toutes les opérations intermédiaires de transformation doivent elles-mêmes être réalisées avec le même soin. Par exemple, les opérations de refoulage préparant les futures lignes de pliages doivent être fines et situées avec précision par rapport au motif imprimé. Les opérations de découpe doivent également être situées avec précision, mais elles doivent en plus être réalisées de manière franche pour ne jamais laisser aucune "barbe", et ce aussi bien tout le long d'un côté que dans les moindres recoins. Il est donc de prime importance de pouvoir réaliser un cylindre-outil actif (de coupe ou de refoulage) et un contre-cylindre lisse associé de qualité effectuant de telles opérations.

On connaît actuellement, notamment pour la fabrication de boîtes pour liquides, des cylindres-outils de coupe comprenant un cylindre porteur présentant des rainures, sur lequel est engagé une ou plusieurs bases en forme de partie de cylindre creux, lesquelles bases sont garnies de segments dont la surface externe a été usinée pour faire apparaître des lames de coupe. La position de la base sur le cylindre porteur est fixée grâce à des ergots internes à la base se calant dans les rainures. La position des segments sur une base est imposée par des boulons traversant ces segments pour être vissés dans la base ou traversant simultanément le segment et la base pour être vissés dans des taraudages du cylindre porteur. L'avantage de ce dispositif est que les segments sont interchangeables. En d'autres termes, il est aisé de changer de format de boîte de liquide, par exemple pour en modifier la contenance, en substituant, en ajoutant ou en retirant sur les bases des segments standard.

Par contre, il s'avère d'abord que la précision de la position des segments, les uns par rapport aux autres et par rapport aux feuilles pré-imprimées, soit insuffisante pour des applications plus fines. Ces imprécisions sont, d'une part, dues à l'addition des erreurs de position des bases par rapport aux cylindres porteurs et des segments par rapport aux bases. Ces imprécisions sont, d'autre part, dues au fait que les segments sont réalisés indépendamment les uns des autres. On constate ainsi couramment un décalage important entre deux couteaux venant à angle droit à la jointure de deux segments. Ils'avère ensuite que le diamètre extérieur du cylindre porteur peut être trop faible par rapport au diamètre total du cylindre-outil, ce qui peut nuire à la rigidité de l'ensemble. De plus, la définition de la disposition des couteaux sur chacun des segments, ainsi que des segments les uns par rapport aux autres, est actuellement longue et fastidieuse. En effet, on cherche dans la mesure du possible à utiliser des segments standard pour composer des couteaux complexes en losange ou en étoile. Enfin, compte tenu du nombre élevé de segments utilisés pour réaliser tout un cylindre-outil, leur calage au mieux devient également long et fastidieux.

Lorsqu'une meilleure précision est actuellement exigée pour une application très particulière, on procède alors par gravure directe sur un cylindre monobloc, et ce de préférence par électro-érosion. Comme on le comprendra, l'inconvénient majeur de ce procédé est qu'il est très difficile de corriger une erreur ou de réparer un couteau cassé. En effet, il convient alors de recharger du métal par soudure à l'endroit nécessaire et de le réaffuter manuellement. Bien évidemment, si le dégat apparaît alors que le cylindre monobloc est installé dans la machine, cette réparation longue et fastidieuse provoque un arrêt de la machine inacceptable au point de vue de la productivité.

Par ailleurs, des effets de flexion dans un cylindre-outil et son contre-cylindre associé peuvent conduire à des effets de résonnance lors de leur rotation à haut régime induisant une ligne de contact inégale entre ce cylindre-outil et son contre-cylindre. En d'autres termes, il est fréquent de constater des coupes franches aux deux extrémités latérales des cylindres et seulement des coupes partielles au centre. Il est malheureusement nécessaire dans ce cas de rapprocher les deux cylindres-outils l'un par rapport à l'autre avec comme inconvénient une déterioration rapide des couteaux aux endroits mis en surpression.

Le but de la présente invention est de fournir un cylindre-outil dont la précision en dimension soit grandement améliorée. La structure d'un tel cylindre doit autoriser des corrections de position radiale, voire des réparations ou remplacements aisés de ses parties constitutives éventuellement défectueuses, par un opérateur tout en préservant les qualités mentionnées précédemment. Enfin, le procédé d'élaboration et de réalisation d'un tel outil pour chaque type ou format de boîte à fabriquer doit être facilité et rendu meilleur marché notamment par l'emploi rationnel de moyens informatiques et d'outils à commande numérique réduisant d'autant le temps de conception et de fabrication.

Ces buts sont atteints, selon l'invention, grâce à un procédé de fabrication d'un cylindre-outil comprenant des segments montés sur un cylindre porteur, lequel procédé consiste à :
- fabriquer un ensemble de segments dont les surfaces internes, longitudinales et latérales, sont usinées avec précision et dont la surface externe est laissée à l'état d'ébauche,
- assembler sur le cylindre porteur de manière jointive, l'ensemble des segments précédemment réalisés constituant ainsi une nouvelle surface externe cylindrique,
- usiner en l'outil désiré la surface cylindrique constituée par l'ensemble des surfaces externes de segments montés sur le cylindre porteur.

Selon un premier mode d'exécution appliqué à un cylindre-outil de coupe, on taille des couteaux dans la surface cylindrique constituée par l'ensemble des surfaces externes de segments montés sur le cylindre porteur. Avantageusement, l'opération de taille des couteaux est réalisée par une machine à commande numérique comprenant des moyens de stockage d'informations dans lesquels ont été chargées des informations relatives à la disposition des couteaux sur la surface cylindrique.

Selon un second mode d'exécution appliqué à un contre-cylindre lisse, la surface cylindrique constituée par l'ensemble des surfaces externes de segments montés sur le cylindre porteur est rectifiée. Utilement, la surface cylindrique du contre-cylindre lisse est corrigée par rapport au cylindre de coupe lors de la mise en oeuvre par insertion d'une ou plusieurs cales métalliques ou dépôt d'un liquide prévu pour durcir sous un ou plusieurs segments conjoints.

De préférence, un segment pour la mise en oeuvre du procédé se présente sous la forme générale d'une partie rectangulaire de cylindre creux dont l'axe est confondu avec celui du cylindre porteur, partie dont l'un des côtés est parallèle à l'axe du cylindre, dont la surface cylindrique interne correspond à celle externe du cylindre porteur et dont la surface externe présente, vu en coupe transversale à l'axe du cylindre porteur, la forme d'une portion de polygone régulier contenant le diamètre extérieur du cylindre-outil prévu.

Comme on peut facilement le comprendre, le procédé selon l'invention est tout particulièrement intéressant dans la mesure où il permet d'obtenir des cylindres-outils précis et retouchables.

L'invention sera mieux comprise à l'étude de modes de réalisation pris à titre d'exemples nullement limitatifs et décrits par les figures annexées dans lesquelles:

- la figure 1 illustre un cylindre-outil de coupe supérieur selon l'invention associé à un contre-cylindre lisse inférieur standard. Ce cylindre de coupe est représenté achevé seulement sur son côté gauche et l'un des segments à l'état d'ébauche est sorti.

- la figure 2 illustre un cylindre-outil de coupe supérieur standard associé à un contre-cylindre lisse inférieur selon l'invention. Pour une meilleure compréhension, ce contre-cylindre est représenté rectifié seulement partiellement sur son côté gauche et l'un des segments à l'état d'ébauche est sorti.

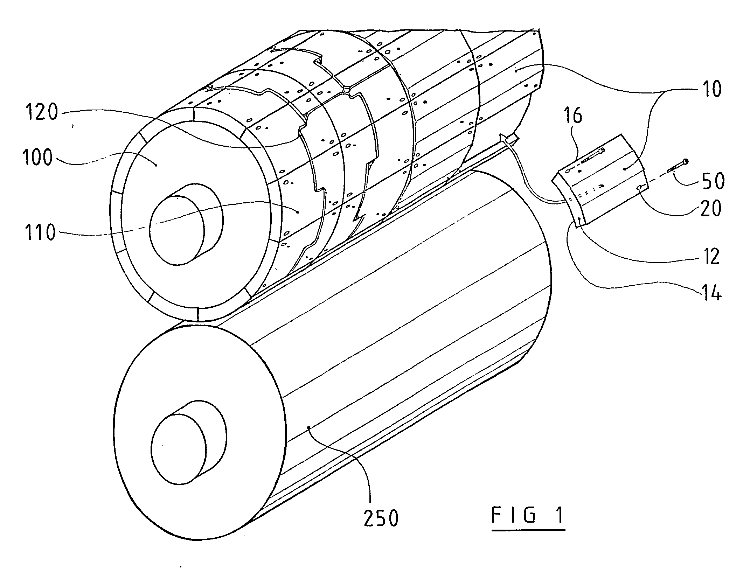

En référence à la figure 1, le cylindre-outil de coupe comprend un arbre porteur 100 recouvert par un ensemble de segments 10 à l'état d'ébauche, usinés par la suite en segments 110. Le contre-cylindre lisse associé 250 est d'un type usuel.

Comme on peut mieux l'observer sur la partie droite de la figure, un segment 10 se présente sous la forme générale d'une plaque rectangulaire disposée longitudinalement par rapport à son cylindre porteur et courbée selon le rayon de ce même cylindre porteur 100. En d'autres termes, ce segment 10 est une partie de cylindre creux dont le rayon de la surface cylindrique interne est égal au rayon du cylindre porteur 100, dont le rayon de la surface cylindrique externe est au moins supérieur au rayon du futur cylindre-outil.

Plus particulièrement, lorsque le segment 10 est appliqué contre son cylindre porteur 100, chaque face longitudinale 16 appartient à un plan passant par l'axe du cylindre alors que chaque face latérale 12 appartient à un plan orthogonalement à ce même axe de cylindre 100. De préférence, le nombre de segments est déterminé en fonction de la géométrie des boîtes à réaliser, étant bien entendu que plusieurs découpes de boîtes peuvent être réparties sur l'alèse et la périphérie A titre d'exemple nullement limitatif, pour un cylindre porteur de diamètre extérieur égal à environ 30 cm, les plans définissant les faces longitudinales 16 des segments 10 s'intersectent sur l'axe du cylindre avec un angle d'environ 36 degrés, ce qui revient, en d'autres termes, à prévoir dans ce cas particulier une dizaine de segments pour entourer le cylindre le long de son périmètre.

Compte tenu que la surface externe de ce segment 10 est considérée comme une ébauche, il n'est pas nécessaire que cette surface soit exactement cylindrique. Aussi, il peut être plus aisé et rapide d'usiner une surface externe présentant, vu en coupe transversale à un côté longitudinal, la forme d'une portion de polygone régulier qui devra au moins contenir le diamètre extérieur du futur cylindre-outil prévu.

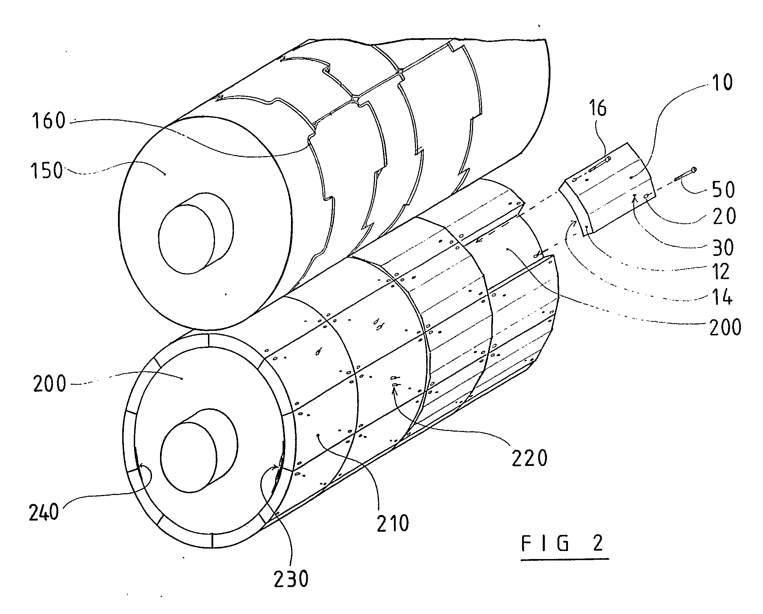

En référence à la figure 2, le cylindre de coupe 150 est de type standard monobloc et présente sur sa surface cylindrique des couteaux 160. Le contre-cylindre lisse inférieur selon l'invention comprend un arbre porteur 200 recouvert par un autre ensemble de segments 10 à l'état d'ébauche, rectifiés par la suite en des segments 210, puis complété, si nécessaire, par des aiguilles 220. Un segment 10 est également représenté sur la droite de la figure, sorti hors de ce contre-cylindre.

Tels que décrits précédemment, les cylindres-outils sont réalisés de la manière suivante:

On usine d'abord un nombre suffisant de segments 10 pour constituer un premier ensemble permettant au moins une couverture totale de l'arbre porteur 100 et/ou un second ensemble permettant de même la couverture totale de l'arbre porteur 200, ainsi que, selon les besoins, un nombre suffisant pour de futures pièces de rechange ou pour doubler la totalité des ensembles initiaux. Puis la surface interne 14 de chaque segment est usinée de manière très exacte. De même, chaque face longitudinale 16 et latérale 12 est également usinée très précisément. Puis des orifices de fixation 20 sont percés en chacun des quatre coins ainsi que deux taraudages 30 prévus pour des outils extracteurs. Si les segments sont prévus pour être montés sur un contre-cylindre muni d'aiguilles d'éjection 220, on prévoira alors également un ou plusieurs orifices pour le logement de ces aiguilles. Enfin chaque segment est frappé d'une référence décrivant sa future position sur son cylindre porteur. Cette référence est éventuellement complétée par un numéro de série et/ou d'une indication de sa dureté.

Une fois réalisés, les segments 10 sont installés de manière jointive sur leur cylindre porte-outils 100 ou 200 à l'aide des boulons 50 traversant les orifices 20 pour s'engager dans des taraudages en correspondance taillés dans les arbres porteurs. Compte tenu des précautions prises, notamment lors de la l'usinage des surfaces inférieures et latérales de ces segments, ce montage crée sur un cylindre porteur un pavage sans aucun interstice, lequel constitue alors une nouvelle surface cylindrique externe continue.

Pour créer alors un contre-cylindre lisse, il suffit d'installer le cylindre porteur 200 garni sur une rectifieuse. Cette machine-outil ramène la nouvelle surface externe polygonale en une surface cylindrique lisse ayant une cote extérieure établie en fonction du type de découpe à travailler. On achève alors la réalisation en installant les aiguilles d'éjection 220.

Pour réaliser un cylindre-outil de coupe, on procède à ce stade de manière analogue qu'avec un cylindre monobloc, c'est-à-dire qu'on installe ce cylindre porteur 100 garnit sur une machine d'usinage. De préférence, on utilise une machine-outil à commande numérique comprenant des moyens de stockage d'informations dans lesquels peuvent être chargées des informations relatives au travail à effectuer. Le technicien peut alors programmer cette machine-outil selon un plan unique de disposition des couteaux sur l'ensemble du cylindre-outil.

On comprend qu'en procédant de cette manière, la machine-outil ne tienne plus compte de l'existence ou non d'une limite de segment et poursuive la taille d'un couteau de manière continue d'un segment à un autre. Bien entendu, le technicien aura pris garde comme auparavant de ne pas précisément disposer un couteau sur un interstice.

Eventuellement, un second jeu ou ensemble complet de segments nécessaire pour garnir la totalité d'un arbre porteur 100 est réalisé de manière analogue. En variante, si les segments présentant les plus grands risques de détérioration sont connus, on ne fabrique de segments de rechange que pour ceux-ci. A cette fin, on installe des ébauches sur un cylindre porteur 100 avec des cales de plus faible épaisseur, de telle sorte que la position des ébauches reste rigoureusement identique. Alors, la commande numérique de la machine-outil permet de les usiner avec la même précision que les autres.

Le cylindre-outil de coupe est alors installé dans la machine rotative comme illustré sur la figure 1 et des essais de découpe de feuilles de carton peuvent être effectués.

Si un défaut majeur apparaît ou si un couteau vient à se casser par la suite, on peut aisément déduire la position du couteau défectueux ainsi que sa référence en constatant le résultat sur la feuille à la sortie. Le segment correspondant 10 peut alors être dévissé puis extrait à l'aide d'outils engagés dans les orifices taraudés 30 prévus à cet effet.

Soit ce segment est remplacé par sa pièce de rechange, si eue existe, soit il est retravaillé en atelier. Comme on peut le constater, la rectification du cylindre-outil de coupe ne nécessite plus, selon l'invention, la dépose du cylindre-outil même, mais seulement d'une petite partie très accessible.

De même le cylindre lisse est installé dans une machine rotative, soit avec un cylindre-outil de coupe conventionnel tel qu'illustré sur la figure 2, soit avec un cylindre-outil de coupe également selon l'invention. Des essais peuvent alors être entrepris.

Le résultat le plus probable des essais est qu'un ou quelques couteaux ne coupent pas suffisamment. Plutôt que les remplacer, il peut alors être plus avantageux de régler la position radiale d'un ou de plusieurs segments 210 correspondants, notamment en les sur-élevant. Comme précédemment, ces segments 210 sont repérés par déduction après lecture des résultats sur les feuilles d'essai. Selon l'importance, un ou plusieurs segments 230 sont dégagés provisoirement pour intercaler entre ces segments 210 et le cylindre porteur 200 une ou plusieurs cales d'épaisseur 230. Ces cales d'épaisseur peuvent avantageusement être des bandes d'acier souple d'épaisseur prédéterminée telle que 3/100 ou 2/100 de millimètres. Des essais en atelier ont montré que des corrections inférieures au 1/100 de millimètre sont possibles en utilisant du papier de soie ou en pulvérisant finement une laque 240. Les segments lisses 210 sont alors revissés en place.

Comme on a pu le constater à la lecture de cet exposé, il n'est plus nécessaire, selon ce procédé, d'établir un plan détaillé pour chaque segment différent du cylindre-outil de coupe, mais un seul plan de disposition générale des couteaux sur l'ensemble du cylindre. Ce plan peut, par la suite, être interprété numériquement pour chargement dans une machine à commande numérique. La qualité désirée en position et l'efficacité de coupe est réalisée, d'une part, en réduisant d'un niveau le nombre de couches de pièces rapportées sur le cylindre porteur (permettant d'ailleurs l'augmentation de son diamètre), et, d'autre part, grâce à la taille en mode continu des couteaux 120 respectif. Il s'est également avéré de façon surprenante que l'usage de ces moyens informatiques lors de la conception d'un outil permet de réduire très sensiblement le nombre de segments 10 nécessaires.

L'élément essentiel de la présente invention étant le caractère jointif du pavage des cylindres porteurs par l'ensemble des segments 10, on comprend aisément par analogie au carrelage, que d'autres formes extérieures de partie cylindrique soient possibles pour ces segments 10, telles que rectangulaire dans le sens transversal du cylindre, en losange ou toute autre forme complémentaire. De même, la surface externe de ces segments 10, mentionnée comme polygonale, peut également être cylindrique ou de toute autre forme convexe pour autant que le volume crée par l'ensemble des segments 10 à l'état d'ébauche englobe le volume du futur cylindre-outil.

De nombreuses améliorations peuvent être apportées à ces cylindres-outils et à ce procédé de réalisation dans le cadre de cette invention.

## Revendications

1. Procédé de fabrication d'un cylindre-outil dans une machine rotative travaillant une matière en bande ou en plaque, lequel cylindre-outil comprend des segments montés sur un cylindre porteur, caractérisé en ce qu'il consiste à :
- fabriquer un ensemble de segments (10) dont les surfaces internes (14), longitudinales (16) et latérales (12), sont usinées avec précision et dont la surface externe est laissée à l'état d'ébauche,
- assembler sur le cylindre porteur (100, 200), de manière jointive, l'ensemble des segments (10) précédemment réalisés constituant ainsi une nouvelle surface externe cylindrique,
- usiner en l'outil désiré la surface cylindrique constituée par l'ensemble des surfaces externes de segments (10) montés sur le cylindre porteur.

2. Procédé de fabrication d'un cylindre-outil de coupe selon la revendication 1, caractérisé en ce qu'on taille des couteaux (120) sur la surface cylindrique constituée par l'ensemble des surfaces externes de segments (10) montés sur le cylindre porteur (100).

3. Procédé de fabrication d'un cylindre-outil de coupe, selon la revendication 2, caractérisé en ce que l'opération de taille des couteaux (120), sur la surface cylindrique constituée par l'ensemble des surfaces externes de segments (10) montés sur le cylindre porteur(100), est réalisée par une machine à commande numérique comprenant des moyens de stockage d'informations dans lesquels ont été chargées des informations relatives à la disposition des couteaux (120) sur la surface cylindrique.

4. Procédé de fabrication d'un contre-cylindre lisse, selon la revendication 1, caractérisé en ce que la surface cylindrique constituée par l'ensemble des surfaces externes de segments (10) montés sur le cylindre porteur (200) est rectifiée.

5. Procédé de mise en oeuvre d'un contre-cylindre lisse selon les revendications 1 ou 4 associé à un cylindre-outil de coupe (100/110) 150), caractérisé en ce que la surface cylindrique du contre-cylindre, constituée par l'ensemble des surfaces externes de segments (10), est corrigée selon le cylindre-outil de coupe par insertion d'une ou plusieurs cales métalliques (230) sous un ou plusieurs segments (210) conjoints.

6. Procédé de mise en oeuvre d'un contre-cylindre lisse selon les revendications 1 ou 4 associé à un cylindre-outil de coupe (100/110, 150), caractérisé en ce que la surface cylindrique du contre-cylindre, constituée par l'ensemble des surfaces externes de segments (10), est corrigée selon le cylindre-outil de coupe par dépôt d'une mince couche d'un liquide (240) prévu pour durcir sous un ou plusieurs segments (210) conjoints.

7. Segment (10) pour la mise en oeuvre du procédé, selon la revendication 1, caractérisé en ce qu'il se présente sous la forme générale d'une partie rectangulaire de cylindre creux dont l'axe est confondu avec celui du cylindre porteur (100, 200), partie dont l'un des côtés est parallèle à l'axe du cylindre, dont la surface cylindrique interne (14) correspond à celle externe du cylindre porteur (100, 200), et dont la surface externe présente, vu en coupe transversale à l'axe du cylindre porteur, la forme d'une portion de polygone régulier contenant le diamètre extérieur du cylindre-outil prévu.

8. Cylindre-outil fabriqué selon le procédé de l'une des revendication 1 à 6.

120
100
110
16
10
50
20
12
14
250

F I G   1

EP 0 396 899 A2

EP 0 396 899 A2

FIG 2